# EUROPÄISCHE PATENTSCHRIFT

(11) **EP 3 119 827 B1**
(45) Veröffentlichungstag und Bekanntmachung des Hinweises auf die Patenterteilung: **06.05.2020**
(21) Anmeldenummer: 15709480.6
(22) Anmeldetag: 12.03.2015
(51) Int. Cl.: C08G 18/80, C08G 18/58, C08G 18/28, C09J 175/04, B32B 27/40, B32B 27/38, B32B 27/12, B32B 27/18, B32B 27/28, B32B 37/12, C09J 7/25, C09J 7/28, C09J 7/29, C09J 7/24, C09J 163/00, C09J 5/04, B32B 7/00, B32B 7/12, C08G 18/40, C08G 18/48

(54) **POLYURETHAN-KLEBSTOFF MIT EPOXIDGRUPPEN**
POLYURETHANE ADHESIVE CONTAINING EPOXIDE GROUPS
ADHÉSIF POLYURÉTHANE CONTENANT DES GROUPES EPOXYDES

(30) Priorität: 17.03.2014 DE 102014204925
(43) Veröffentlichungstag der Anmeldung: 25.01.2017
(73) Patentinhaber: Henkel AG & Co. KGaA, 40589 Düsseldorf (DE)
(72) Erfinder: EICHELMANN, Holger, 40724 Hilden (DE); BLODAU, Marcel, 47807 Krefeld (DE); POEL, Andre te, 47877 Willich (DE)
(86) Internationale Anmeldenummer: PCT/EP2015/055118
(87) Internationale Veröffentlichungsnummer: WO 2015/140025

(56) Entgegenhaltungen:
- EP-A1- 0 377 363
- EP-A1- 0 781 790
- DE-A1-102006 059 464
- US-A- 4 443 590

## Beschreibung

Die vorliegende Erfindung betrifft ein Verfahren zum Herstellen von kaschierten Mehrschichtfolien, wobei mindestens zwei Folien mit einem Polyurethan-Klebstoff miteinander verklebt werden, wobei der PU-Klebstoff ein niedermolekulares Epoxid enthält, sowie Mehrschichtfolien, die durch das beschriebene Verfahren erhältlich sind..

Kaschierklebstoffe sind in der Industrie allgemein bekannt. Es handelt sich dabei um lösemittelhaltige oder lösemittelfreie, vernetzende oder physikalisch abbindende Klebstoffe, die dazu dienen, dünne, flächige Substrate, wie beispielsweise Kunststofffolien, Metallfolien, Papier oder Kartonagen, miteinander zu verkleben. Dabei ist es wesentlich, dass durch die Verklebung die Flexibilität der dünnen einzelnen Lagen nur wenig vermindert wird. Durch die Auswahl der einzelnen Folienlagen ist es möglich, bestimmte Eigenschaften dieser Mehrschichtfolien zu beeinflussen, insbesondere die Durchlässigkeit für Wasser oder andere Flüssigkeiten, die Chemikalienbeständigkeit sowie die Durchlässigkeit für Sauerstoff oder andere Gase.

Weiter ist es bekannt, dass aus solchen Mehrschichtfolien Verpackungen gefertigt werden. In solchen Verpackungen können beispielsweise Lebensmittel in fester, pastöser oder flüssiger Form verpackt werden. Weiterhin können auch Gegenstände des täglichen Bedarfs, beispielsweise Kunststoffbestecke, verpackt werden. Weiterhin sind solche Verpackungen geeignet, auch medizinische Materialien oder Gegenstände aufzunehmen.

Aus den oben genannten Anwendungsgebieten ergibt sich, dass möglichst keine niedermolekularen Stoffe aus den Verpackungen in das verpackte Gut migrieren dürfen. Es kann sich dabei um aromaschädliche Stoffe handeln oder die entsprechenden Stoffe haben bei Inkorporation eine die Gesundheit beeinträchtigende Wirkung.

Bei solchen Stoffen kann es sich im Falle von mit Polyurethanen verklebten Folien insbesondere um Abbauprodukte der eingesetzten Isocyanatvorprodukte, beispielsweise der hydrolysierten Polyisocyanate, handeln. Aus solchen Polyisocyanatvorprodukten können dabei primäre Amine, insbesondere primäre aromatische Amine entstehen. Von diesen ist es bekannt, dass sie die Gesundheit beeinträchtigen. Deswegen gibt es verschiedene Normen, die einen Maximalgehalt von solchen primären aromatischen Aminen in zur Verpackung geeigneten Folien festlegen.

Bei Epoxid-haltigen Klebstoffen stellt sich ein ähnliches Problem dadurch, dass nicht umgesetzte Epoxid-Monomere in das verpackte Gut migrieren. Das ist insbesondere unter Sterilisierungsbedingen, vor allem bei der Dampfsterilisierung, der Fall.

Besonders im Verpackungsbereich, speziell bei Lebensmittelverpackungen, sind solche Migrate unerwünscht. Die vorliegende Erfindung hat sich deshalb die Aufgabe gestellt, ein Verfahren zur Herstellung von kaschierten Mehrschichtfolien unter Verwendung eines Klebstoffs zur Verfügung zu stellen, der bei längerer Lagerung oder bei Sterilisation einen verminderten Anteil von Migraten, insbesondere Epoxidmonomeren, aufweist.

US 4 443 590 beschreibt eine Polyurethan-Zusammensetzung vom Multipack-Typ, die bei Umgebungstemperatur aushärtbar ist und eine Isocyanatkomponente mit Oxadiazinerionering, eine aktive Wasserstoffkomponente und eine Lewis-Base umfasst, deren basische Stelle keinen für die NCO-Gruppe aktiven Wasserstoff aufweist und ein Verfahren zur Herstellung von Polyurethanen aus der Zusammensetzung.

EP 0 377 363 offenbart eine 2K-Polyurethanklebstoff-Formulierung, bestehend aus einer Isocyanatkomponente und einer Polyolkomponente, enthaltend hydroxyfunktionelles Polybutadientelechel, Diol, Aminkatalysator, Additive und Glycerineperoxid als niedermolekulares Epoxid mit mindestens einer Epoxidgruppe und mindestens einer Hydroxygruppe in einer Menge von 3 Gew.-%, bezogen auf den gesamten Klebstoff.

Die Aufgabe wird dadurch gelöst, dass ein Verfahren zur Herstellung von kaschierten Mehrschichtfolien zur Verfügung gestellt wird, bei dem mindestens zwei Folien mit einem Polyurethan-Klebstoff miteinander verklebt werden, , wobei der PU-Klebstoff mindestens ein NCO-funktionelles Polyurethanpräpolymer und/oder mindestens ein Polyisocyanat enthält, wobei der PU-Klebstoff zwischen 0,1 bis 20 Gew.-% eines niedermolekularen Epoxids enthält, das mindestens eine Epoxidgruppe und mindestens eine Hydroxygruppe enthält, wobei das Epoxid chemisch ungebunden oder über mindestens eine Hydroxygruppe chemisch gebunden vorliegt. Die erfindungsgemäß eingesetzten Klebstoffe zeigen auch unter Dampfsterilisierungsbedingungen ("retort conditions") eine verringerte oder nicht mehr nachweisbare Migration von Epoxidmonomeren. Zusätzlich sind die Haftungseigenschaften unter solchen Dampfsterilisierungsbedingungen verbessert. Schließlich härten die beschriebenen Klebstoffe bei Raumtemperatur ohne die Verwendung zusätzlicher Katalysatoren vollständig aus. Aus diesen Gründen sind sie besonders für die Herstellung von Lebensmittelverpackungen, vor allem sogenannte "retort pouches" (Retort-Beutelverpackungen) geeignet.

Weiterhin betrifft die Erfindung entsprechend hergestellte Mehrschichtfolien.

Die im vorliegenden Text angegebenen Molekulargewichte beziehen sich, soweit nicht anders angegeben, auf das zahlenmittlere Molekulargewichts (Mn). Alle Molekulargewichtsangaben beziehen sich, soweit nicht anders angegeben, auf Werte, wie sie durch Gelpermeationschromatographie (GPC) gemäß der Norm DIN 55672-1:2007-08 erhältlich sind.

"Mindestens ein", wie hierin verwendet, bedeutet 1 oder mehr, d.h. 1, 2, 3, 4, 5, 6, 7, 8, 9 oder mehr. Bezogen auf einen Inhaltsstoff bezieht sich die Angabe auf die Art des Inhaltsstoffs und nicht auf die absolute Zahl der Moleküle. "Mindestens ein Polyol" bedeutet somit beispielsweise mindestens eine Art von Polyol, d.h. dass eine Art von Polyol oder eine Mischung mehrerer verschiedener Polyole verwendet werden kann. Zusammen mit Gewichtsangaben bezieht sich die Angabe auf alle Verbindungen der angegebenen Art, die in der Zusammensetzung/Mischung enthalten sind, d.h. dass die Zusammensetzung über die angegebene Menge der entsprechenden Verbindungen hinaus keine weiteren Verbindungen dieser Art enthält.

Alle Prozentangaben, die im Zusammenhang mit den hierin beschriebenen Zusammensetzungen gemacht werden, beziehen sich, sofern nicht explizit anders angegeben auf Gew.-%, jeweils bezogen auf die betreffende Mischung.

"Ungefähr" oder "ca.", wie hierin im Zusammenhang mit einem Zahlenwert verwendet bezieht sich auf den Zahlenwert ±10 %, vorzugsweise ±5 %.

Polyurethan-Klebstoffe sind allgemein bekannt. Diese werden auch zum Kaschieren von Mehrschichtfolien eingesetzt. Bei den erfindungsgemäß geeigneten Klebstoffen handelt es sich um 1K-Polyurethan-Klebstoffe oder 2K-Polyurethan-Klebstoffe. Die 1K-Polyurethan-Klebstoffe umfassen eine Polyisocyanatkomponente, die 2K-Polyurethan-Klebstoffe dagegen neben der Polyisocyanatkomponente noch eine weitere Komponente, die Verbindungen mit mindestens zwei H-aciden funktionellen Gruppen umfasst. H-acide funktionelle Gruppen sind beispielsweise Hydroxygruppen, Aminogruppen, Mercaptogruppen oder Carboxylgruppen. Bei dieser weiteren Komponente handelt es sich vorzugsweise um eine Polyolkomponente, also eine Komponente, die Polyole umfasst. Die Klebstoffe können flüssig sein, es kann sich jedoch auch um Schmelzklebstoffe handeln. Die Klebstoffe können Lösemittel enthalten, bevorzugt sind sie jedoch frei von Lösemitteln. Die Vernetzung der erfindungsgemäßen geeigneten Polyurethan-Klebstoffe beruht auf der Umsetzung von reaktiven NCO-Gruppen mit H-aciden funktionellen Gruppen. Eine alternative Vernetzungsmethode besteht darin, dass die NCO-Gruppen mit Feuchtigkeit aus dem aufgetragenen Klebstoff, dem Substrat, oder der Umgebung unter Bildung von Harnstoffgruppen reagieren. Diese Vernetzungsreaktionen sind bekannt, sie können auch nebeneinander ablaufen. Zur Beschleunigung solcher Reaktionen sind üblicherweise Katalysatoren im Klebstoff vorhanden, beispielsweise Amin- oder Zinnkatalysatoren.

Als Polyisocyanate in der Polyisocyanatkomponente können die bekannten Lack- oder Klebstoff-Polyisocyanate eingesetzt werden, wobei es sich um Polyisocyanate mit zwei oder mehr Isocyanat-Gruppen handelt. Geeignete Polyisocyanate sind beispielsweise 1,5-Naphthylendiisocyanat (NDI), 2,4'- oder 4,4'-Diphenylmethandiisocyanat (MDI), hydriertes MDI (H12MDI), Xylylendiisocyanat (XDI), Tetramethylxylylendiisocyanat (TMXDI), Di- und Tetraalkylendiphenylmethandiisocyanat, 4,4'-Dibenzyldiisocyanat, 1,3- oder 1,4-Phenylendiisocyanat, Toluylendiisocyanat (TDI), 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (IPDI), Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylen-diisocyanat, Methylentriphenyltriisocyanat (MIT), Phthalsäure-bis-isocyanato-ethylester, Trimethylhexamethylendiisocyanat, 1,4-Diisocyanatobutan, 1,12-Diisocyanatododecan und Dimerfettsäurediisocyanat.

Als mindestens trifunktionelle Isocyanate geeignet sind Polyisocyanate, die durch Trimerisation oder Oligomerisation von Diisocyanaten oder durch Reaktion von Diisocyanaten mit niedermolekularen polyfunktionellen hydroxyl- oder aminogruppenhaltigen Verbindungen entstehen. Kommerziell erhältliche Beispiele sind Trimerisierungsprodukte der Isocyanate HDI, MDI oder IPDI oder Addukte aus Diisocyanaten und niedermolekularen Triolen, wie Trimethylolpropan oder Glycerin. Weitere Beispiele sind Isocyanurate des Hexamethylendiisocyanates (HDI) und Isocyanurate des Isophorondiisocyanats (IPDI).

Es können im Prinzip aliphatische, cycloaliphatische oder aromatische Isocyanate eingesetzt werden, insbesondere sind jedoch aromatische Isocyanate geeignet. Die im erfindungsgemäßen Verfahren verwendeten PU-Klebstoffe können die Isocyanate umgesetzt als PU-Präpolymere enthalten oder sie enthalten zumindest anteilig niedermolekulare, ggf. oligomere, Isocyanate. Zur Herstellung der PU-Präpolymere können dieselben Polyole verwendet werden, die auch in der Polyolkomponente eingesetzt werden.

Die im erfindungsgemäßen Verfahren verwendenten PU-Klebstoffe können auch Isocyanatofunktionelle Silane, wie beispielsweise die, die in der EP1456274 A1 beschrieben werden, als Härter für eine Polyol(e) oder Hydroxy-terminierte PU-Präpolymere enthaltende Klebstoffmischung enthalten.

In der Ausführungsform als 2K-PU-Klebstoff besteht der Klebstoff neben der Polyisocyanatkomponente noch aus einer zweiten Komponente. Diese zweite Komponente umfasst Verbindungen mit H-aciden funktionellen Gruppen. Vorzugsweise handelt es sich bei der Komponente um eine Polyolkomponente. Die Polyolkomponente enthält mindestens ein Polyol. Dabei kann es sich um ein einzelnes Polyol handeln oder bevorzugt um ein Gemisch von mehreren Polyolen. Geeignete Polyole sind aliphatische und/oder aromatische Alkohole mit 2 bis 6, vorzugsweise 2 bis 4, OH-Gruppen pro Molekül. Die OH-Gruppen können sowohl primär als auch sekundär sein.

Zu den geeigneten aliphatischen Alkoholen zählen beispielsweise Ethylenglykol, Propylenglykol, Butandiol-1,4, Pentandiol-1,5, Hexandiol-1,6, Heptandiol-1,7, Octandiol-1,8 und deren höhere Homologen oder Isomeren. Ebenfalls geeignet sind höherfunktionelle Alkohole wie beispielsweise Glycerin, Trimethylolpropan, Pentaerythrit sowie oligomere Ether der genannten Substanzen. Bevorzugt werden als Polyolkomponente Umsetzungsprodukte niedermolekularer polyfunktioneller Alkohole mit Alkylenoxiden, eingesetzt. Die Alkylenoxide weisen vorzugsweise 2 bis 4 C-Atome auf. Geeignet sind beispielsweise die Umsetzungsprodukte von Ethylenglykol, Propylenglykol, den isomeren Butandiolen, Hexandiolen oder 4,4'-Dihydroxy-diphenylpropan mit Ethylenoxid, Propylenoxid oder Butylenoxid, oder Gemischen aus zwei oder mehr davon. Ferner sind auch die Umsetzungsprodukte polyfunktioneller Alkohole, wie Glycerin, Trimethylolethan oder Trimethylolpropan, Pentaerythrit oder Zuckeralkohole, oder Gemischen aus zwei oder mehr davon, mit den genannten Alkylenoxiden zu Polyetherpolyolen geeignet. Weitere, im Rahmen der Erfindung gebräuchliche Polyole, entstehen durch Polymerisation von Tetrahydrofuran (Poly-THF).

Ebenfalls zum Einsatz als Polyolkomponente geeignet sind Polyether, die durch Vinylpolymere modifiziert wurden. Derartige Produkte sind beispielsweise erhältlich, indem Styrol- oder Acrylnitril, oder deren Gemisch, in der Gegenwart von Polyethern polymerisiert werden.

Weiter geeignete Polyole, die erfindungsgemäß bevorzugt sind, sind Polyesterpolyole.

Beispiele dafür sind Polyesterpolyole, die durch Umsetzung von niedermolekularen Alkoholen, insbesondere von Ethylenglykol, Diethylenglykol, Neopentylglykol, Hexandiol, Butandiol, Propylenglykol, Glycerin oder Trimethylolpropan mit Caprolacton entstehen.

Weitere geeignete Polyesterpolyole sind durch Polykondensation herstellbar. Derartige Polyesterpolyole umfassen bevorzugt die Umsetzungsprodukte von polyfunktionellen, vorzugsweise difunktionellen Alkoholen und polyfunktionellen, vorzugsweise difunktionellen und/oder trifunktionellen Carbonsäuren oder Polycarbonsäureanhydriden. Zur Herstellung derartiger Polyesterpolyole geeignet sind insbesondere Hexandiol, 1,4-Hydroxymethylcyclohexan, 2-Methyl-1,3-propandiol, Butantriol-1,2,4, Triethylenglykol, Tetraethylenglykol, Ethylenglykol, Polyethylenglykol, Dipropylenglykol, Polypropylenglykol, Dibutylenglykol und Polybutylenglykol. Es können auch Anteile an trifunktionellen Alkoholen zugesetzt werden.

Die Polycarbonsäuren können aliphatisch, cycloaliphatisch, aromatisch oder heterocyclisch oder beides sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Phthalsäure, Isophthalsäure, Terephthalsäure, Trimellithsäure, Phthalsäureanhydrid, Tetrahydrophthalsäureanhydrid, Hexahydrophthalsäureanhydrid, Glutarsäureanhydrid, Maleinsäure, Maleinsäureanhydrid, Fumarsäure, Dimerfettsäure oder Trimerfettsäure oder Gemische aus zwei oder mehr davon geeignet. Gegebenenfalls können auch Anteile an Tricarbonsäuren zugesetzt werden.

Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäure-enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Weitere geeignete Polyole sind Polycarbonat-Polyole und Dimerdiole (Fa. Henkel) sowie Rizinusöl und dessen Derivate. Auch die Hydroxy-funktionellen Polybutadiene, wie sie z.B. unter dem Handelsnamen Poly-bd erhältlich sind, können für die erfindungsgemäßen Zusammensetzungen als Polyole eingesetzt werden.

Ebenfalls als Polyolkomponente geeignet sind Polyacetale. Unter Polyacetalen werden Verbindungen verstanden, wie sie aus Glykolen, beispielsweise Diethylenglykol oder Hexandiol oder deren Gemisch mit Formaldehyd erhältlich sind. Im Rahmen der Erfindung einsetzbare Polyacetale können ebenfalls durch die Polymerisation cyclischer Acetale erhalten werden. Weiterhin als Polyole geeignet sind Polycarbonate. Polycarbonate können beispielsweise durch die Reaktion von Diolen, wie Propylenglykol, Butandiol-1,4 oder Hexandiol-1,6, Diethylenglykol, Triethylenglykol oder Tetraethylenglykol oder Gemischen aus zwei oder mehr davon mit Diarylcarbonaten, beispielsweise Diphenylcarbonat, oder Phosgen, erhalten werden. Ebenfalls geeignet sind Hydroxyester von Polylactonen.

Eine weitere Gruppe von Polyolen können OH-funktionelle Polyurethanpolyole, beispielsweise OHterminierte Polyurethanpräpolymere, sein.

Ebenfalls als Polyolkomponente geeignet sind OH-Gruppen tragende Polyacrylate. Diese Polyacrylate sind beispielsweise erhältlich durch die Polymerisation von ethylenisch ungesättigten Monomeren, die eine OH-Gruppe tragen. Hierzu geeignete ethylenisch ungesättigte Carbonsäuren sind beispielsweise Acrylsäure, Methacrylsäure, Crotonsäure oder Maleinsäure oder deren Ester mit C1 bis C2-Alkoholen. Entsprechende OH-Gruppen tragende Ester sind beispielsweise 2-Hydroxyethylacrylat, 2-Hydroxyethylmethacrylat, 2-Hydroxypropylacrylat, 2-Hydroxypropylmethacrylat, 3-Hydroxypropylacrylat oder 3-Hydroxypropylmethacrylat oder Gemische aus zwei oder mehr davon.

Aus den oben erwähnten Polyolen und den Polyisocyanaten lassen sich auf bekannte Art und Weise PU-Präpolymere herstellen. Dabei kann aus den Polyolen und den Isocyanaten ein NCO-Gruppenhaltiges Präpolymer hergestellt werden. Beispiele dafür sind in der EP-A951493, EP-A1341832, EP-A 150444, EP-A 1456265, WO 2005/097861 beschrieben. Die entsprechenden PU-Präpolymere können mit ebenfalls an sich bekannten weiteren Hilfsstoffen zu Kaschierklebstoffen formuliert werden. Gegebenenfalls können solche Klebstoffe auch organische Lösemittel enthalten, soweit diese nicht mit den vorhandenen Isocyanat-Gruppen reagieren.

Die so erhaltenen PU-Präpolymere weisen mit H-aciden funktionellen Gruppen oder mit Wasser reaktive Isocyanatgruppen auf. Sie haben vorzugsweise ein Molekulargewicht von 500 bis 20 000 g/mol. Vorzugsweise liegt die Viskosität der Präpolymere im Bereich von 500 bis 25 000 mPas bei Applikationstemperatur des Klebstoffs in einem Temperaturbereich von 20°C bis 100°C liegen (gemessen nach Brookfield ISO 2555, bei angegebener Temperatur).

Zusätzlich zu den oben erwähnten bekannten Bestandteilen enthält ein im erfindungsgemäßen Verfahren eingesetzter PU-Klebstoff niedermolekulare Epoxide, die mindestens eine Epoxidgruppe und mindestens eine Hydroxygruppe enthalten. Vorzugsweise enthalten diese Verbindungen mindestens zwei Epoxidgruppen und/oder mindestens zwei Hydroxygruppen (OH-Gruppen). Solche OH-Gruppen, insbesondere primäre oder sekundäre OH-Gruppen, ermöglichen, dass die Epoxidverbindungen mit den NCO-Gruppen des NCO-funktionellen PU-Präpolymers oder des Polyisocyanats unter Bildung einer Urethangruppe reagieren. Damit wird die Migrationsfähigkeit der Epoxid-Verbindungen reduziert.

Erfindungsgemäß liegt das niedermolekulare Epoxid im Polyurethan-Klebstoff entweder chemisch ungebunden oder über mindestens eine Hydroxygruppe chemisch gebunden vor. Dies hängt im Wesentlichen von der gewählten Ausführungsform des Klebstoffs ab. Somit kann es einmal bevorzugt sein, dass das niedermolekulare Epoxid chemisch ungebunden vorliegt, ein anderes Mal, dass es über mindestens eine Hydroxygruppe chemisch gebunden vorliegt.

Insbesondere in der Ausführungsform als 1K-Klebstoff liegt das Epoxid chemisch gebunden vor. Dazu wird das Epoxid gegebenenfalls zusammen mit weiteren Komponenten, wie beispielsweise Polyolen, im Zuge der Herstellung des NCO-funktionellen PU-Präpolymers mit einem Polyisocyanat umgesetzt. Durch die Reaktion zwischen der mindestens einen Hydroxygruppe der Epoxid-Verbindung und einer Isocyanatgruppe wird die Epoxid-Verbindung unter Bildung einer Urethangruppe seitenständig oder endständig an das Polymerrückgrat des PU-Präpolymers gebunden oder aber, falls die Epoxid-Verbindung zwei oder mehr Hydroxygruppen aufweist, auch als Bestandteil des Polymerrückgrats in das PU-Präpolymer eingebaut. Alternativ kann das Epoxid auch mit dem zuvor aus Polyolen und Polyisocyanaten hergestellten NCO-funktionellen PU-Präpolymer umgesetzt werden. Da die Hydroxygruppen zur Anbindung der Epoxidverbindung an das PU-Präpolymer oder Polyisocyanat dienen, ist es nicht erforderlich, dass nach der Umsetzung der Epoxidverbindung noch weitere Hydroxygruppen verbleiben. Die mindestens eine Hydroxygruppe der Epoxidverbindung kann also vollständig umgesetzt sein. Es ist aber darauf zu achten, dass das NCO-funktionellen PU-Präpolymer auch nach der Umsetzung mit dem Epoxid weiterhin NCO-Gruppen aufweist. Die NCO-Gruppen sollen also nicht vollständig umgesetzt sein.

In der Ausführungsform des Klebstoffs als 2K-Klebstoff liegt das Epoxid dagegen vorzugsweise chemisch ungebunden vor, das heißt es liegt frei als Mischungsbestandteil derjenigen Komponente vor, die die weiteren H-aciden Verbindungen enthält. Im Zuge der Vernetzungsreaktion der Polyisocyanatkomponente und der Komponente, die die weiteren H-aciden Verbindungen enthält, reagiert die Epoxid-Verbindung dann über ihre Hydroxylgruppe mit einer NCO-Gruppe einer der Verbindungen in der Polyisocyanatkomponente und wird so in das entstehende Netzwerk eingebaut. Im Rahmen der Anmeldung wird unter "niedermolekular" vorzugsweise ein Molekulargewicht von unterhalb 2000 g/mol verstanden. Es ist also vorteilhaft, wenn die niedermolekularen Epoxid-Verbindungen ein Molekulargewicht von weniger als 2000 g/mol aufweisen, besser noch unterhalb von 1500 g/mol, weiter bevorzugt unterhalb von 1000 g/mol, noch weiter bevorzugt weniger als 500 g/mol, insbesondere weniger als 350 g/mol. Weiterhin hat die niedermolekulare Epoxid-Verbindung vorzugsweise ein Molekulargewicht von mehr als 74 g/mol, besonders bevorzugt mehr als 100 g/mol, insbesondere mehr als 120 g/mol. Besonders bevorzugt ist ein Molekulargewicht von 120 bis 350 g/mol.

Bei den Epoxiden kann es sich beispielsweise um Glycidylester oder -ether, insbesondere einen Mono- oder Polyglycidylether eines Polyols, vorzugsweise eines monomeren Polyols, handeln. Die Epoxide werden vorzugsweise ausgewählt aus der Gruppe der Glycidylether höherwertiger Alkohole, wie Glycerin, Erythrit, Pentaerythrit, Xylitol, Sorbitol, oder Mischungen daraus, mit mindestens einer Hydroxygruppe. Ganz besonders bevorzugt ist als Epoxid ein Sorbitol-Glycidylether mit mindestens einer, vorzugsweise zwei oder mehr Hydroxygruppen.

Es ist allgemein bevorzugt, dass die Epoxidverbindung ein Epoxid-Äquivalentgewicht (EEW, epoxy equivalent weight) von 100 bis 500 g/mol, vorzugsweise von 120 bis 350 g/mol, aufweist. Das EEW bezeichnet dabei die Masse an Epoxidverbindung, die 1 mol Epoxidgruppen enthält. Sie ist gemäß der Norm DIN EN ISO 3001:1999-11 bestimmbar.

Die niedermolekularen Epoxid-Verbindungen werden in einer Menge von 0,1 bis 20 Gew.-% bezogen auf den gesamten Klebstoff eingesetzt. Vorzugsweise beträgt die eingesetzte Menge von 0,5 bis 20 Gew.-%, weiter bevorzugt von 1 bis 15 Gew.-%, besonders bevorzugt von 1 bis 10 Gew.-%, insbesondere bevorzugt von 1 bis 4 Gew.-% bezogen auf den gesamten Klebstoff. Die Epoxid-Verbindung kann dabei über eine Hydroxygruppe chemisch gebunden vorliegen, also bereits chemisch unter Erhaltung der Epoxid-Funktionalität umgesetzt sein, oder sie liegt chemisch ungebunden vor, also als chemisch nicht weiter umgesetzte Verbindung. Zur Berechnung des Massenanteils wird im Rahmen der Anmeldung fiktiv angenommen, dass die niedermolekulare Epoxid-Verbindung chemisch ungebunden vorliegt, unabhängig davon, ob das tatsächlich der Fall ist oder nicht. Ist die niedermolekulare Epoxid-Verbindung durch Umsetzung einer Hydroxylgruppe an eine andere Verbindung gebunden, so bezieht sich der Massenanteil also auf die Masse der niedermolekularen Epoxid-Verbindung vor ihrer Umsetzung und nicht auf die Masse des Umsetzungsprodukts.

Weiterhin können in dem erfindungsgemäß verwendeten Klebstoff die üblichen Additive enthalten sein. Bei den weiteren Bestandteilen handelt es sich beispielsweise um Harze (Klebrigmacher), Katalysatoren, beispielsweise auf Basis von metallorganischen Verbindungen oder tertiären Aminen, wie Zinnverbindungen oder DABCO, Stabilisatoren, Vernetzungsmittel oder Viskositätsregler, Füllstoffe oder Pigmente Weichmacher oder Antioxidantien.

1K-PU-Klebstoffe enthalten im Allgemeinen ein oder mehrere NCO-funktionelle PU-Präpolymere. Diese vernetzen üblicherweise unter Einwirkung von Wasser, als Bestandteil des zu verklebenden Substrates oder aus der Luft, zu Klebstoffen. 2K-PU-Klebstoffe enthalten eine Komponente, die die oben genannten PU-Präpolymeren oder die oben genannten Polyisocyanate enthält. Als zweite vernetzende Komponente sind H-acide Verbindungen einsetzbar, beispielsweise Verbindungen mit Hydroxygruppen, Aminogruppen, Mercaptogruppen oder Carboxylgruppen. Beispielsweise können oben erwähnten Polyole, inklusive Polyurethanpolyole, Polyamide oder SH-Gruppen-haltige Polymere eingesetzt werden. Unmittelbar vor der Anwendung werden die beiden Komponenten gemischt und es entsteht ein abreagierender Klebstoff. Dieser muss vor dem Fortschreiten der Vernetzungsreaktion verarbeitet werden.

In verschiedenen Ausführungsformen wird als PU-Klebstoff eine Mischung von Polyolen, insbesondere von Polyesterpoyolen mit höherwertigen monomeren Alkoholen und/oder höherwertigen Polyetherpolyolen, mindestens einem Hydroxy-funktionalisierten Epoxid, insbesondere einem Mono- oder Polyglycidylether eines monomeren Polyols, wie z.B. Sorbitol, und mindestens einem Polyisocyanat, insbesondere einem isocyanato-funktionalisiertem Silan, wie zum Beispiel einem HDI-Isocyanurat-Silan, verwendet.

Vorzugsweise sind die Polyurethan-Klebstoffe bei Applikationstemperaturen flüssig, entweder bei Raumtemperatur oder als Schmelzklebstoff, sodass sie beim erfindungsgemäßen Verfahren zur Herstellung von Mehrschichtfolien in flüssiger Form aufgetragen werden können. Es ist insbesondere bevorzugt, dass die PU-Klebstoffe bei Raumtemperatur flüssig sind.

Die hierin beschriebenen Klebstoffe können Lösemittel enthalten oder lösemittelfrei sein. Als Lösemittel sind grundsätzlich alle dem Fachmann bekannte Lösemittel verwendbar, insbesondere Ester, Ketone, halogenierte Kohlenwasserstoffe, Alkane, Alkene und aromatische Kohlenwasserstoffe. Beispiele für solche Lösemittel sind Methylenchlorid, Trichlorethylen, Toluol, Xylol, Butylacetat, Amylacetat, Isobutylacetat, Methylisobutylketon, Methoxybutylacetat, Cyclohexan, Cyclohexanon, Dichlorbenzol, Diethylketon, Di-isobutylketon, Dioxan, Ethylacetat, Ethylenglykolmonobutyletheracetat, Ethylenglykolmonoethylacetat, 2-Ethylhexylacetat, Glykoldiacetat, Heptan, Hexan, Isobutylacetat, Isooctan, Isopropylacetat, Methylethylketon, Tetrahydrofuran oder Tetrachlorethylen oder Mischungen aus zwei oder mehr der genannten Lösemittel.

Sie können mit üblichen Aggregaten und mit allen gängigen Auftragsverfahren auf die zu verklebenden Substrate, insbesondere Folien, aufgetragen werden, beispielsweise durch Sprühen, Rakeln, 3-4-Walzenauftragswerke im Falle der Anwendung eines lösemittelfreien Systems oder 2-Walzenauftragswerke im Falle der Anwendung eines lösemittelhaltigen Systems. Nach dem Aufbringen werden die zu verklebenden Substrate auf bekannte Art und Weise miteinander verklebt. Dabei ist es zweckmäßig, ggf. erhöhte Temperaturen anzuwenden, um eine bessere Applikation und eine schnellere Vernetzungsreaktion zu erzielen. Die erfindungsgemäßen Klebstoffe zeigen aber bereits bei Raumtemperatur oder nur gering erhöhten Temperaturen, wie 40°C, eine sehr gute Aushärtung.

Die im erfindungsgemäßen Verfahren eingesetzten Polyurethan-Klebstoffe sind als Kaschierklebstoffe geeignet. Sie können in einem Verfahren eingesetzt werden, bei dem bekannte Folien auf Basis von Polymeren, wie PP, PE, OPA, Polyamid, PET, Polyester, Metallfolien miteinander verklebt werden. Dabei wird der Klebstoff erfindungsgemäß vorzugsweise auf eine ggf. vorbehandelte oder bedruckte Folie aufgetragen. Das kann bei erhöhter Temperatur stattfinden, um eine dünne und gleichmäßige Beschichtung zu erzielen. Unter Druck wird dann eine zweite Folie aus gleichem oder anderen Material aufkaschiert. Es kann erwärmt werden, der Klebstoff vernetzt und es entsteht eine Mehrschichtfolie. Diese kann ggf. auch aus mehr als zwei Schichten bestehen.

Üblicherweise werden die Folien nach der Herstellung gelagert. Während dieser Zeit ist es möglich, dass sich die verwendeten Klebstoffe weiter vernetzen. In dieser Zeit können die entstehenden primären Aminogruppen, insbesondere primäre aromatischen Aminogruppen, auch mit den zusätzlich vorhandenen Epoxidgruppen reagieren. Dadurch entstehen Umsetzungsprodukte, die keine aktive Aminfunktion aufweisen und die nicht mehr migrieren können.

Weiterhin ist es möglich, dass bei einer späteren Verarbeitung der Folien ein Schritt zur Erwärmung der verklebten Mehrfachfolien vorgesehen ist. Das kann beispielsweise auch in feuchter Atmosphäre geschehen, z.B. beim Sterilisieren. Auch bei diesen erhöhten Temperaturen ist es erfindungsgemäß möglich, dass die entstehenden primären aromatischen Amine, mit den Epoxidgruppen der niedermolekularen Epoxide reagieren, die sich noch in der vernetzten Kaschierklebstoffschicht befinden.

Durch das erfindungsgemäße Verfahrenist es möglich, kaschierte zwei- oder Mehrschicht-Folien zu erhalten, die den hohen Anforderungen an eine Eignung für Lebensmittel oder medizinische Verpackungen genügen. Insbesondere ist der Gehalt an Epoxidmonomeren und ggf. auch primären aromatischen Aminen, die bei den entsprechenden Testverfahren aus der Folie extrahiert werden, deutlich vermindert.

Insbesondere ist es möglich, Folien zu erhalten, die einen Gehalt von kleiner 1 ppb (Gewichtsteile) Extraktionslösung Epoxidmonomere gemessen mit LC-ESI-MS aufweisen. Als Standard wurde eine Probe des Epoxids verwendet, deren Gehalt mit 100% angenommen wurde. Darüber hinaus können Folien erhalten werden, die weniger als 10 µg/1L Extraktionslösung primäre aromatische Amine aufweisen. Dabei ist der Effekt unmittelbar nach der Vernetzung des Klebstoffs zu beobachten, er ist jedoch auch nach einer späteren Sterilisation festzustellen.

Durch die im erfindungsgemäßen Verfahren eingesetzten Polyurethan-Klebstoffe ist es möglich Klebstoffe herzustellen, die eine hervorragende Eignung als Kaschierklebstoff haben. Auftragsverhalten, Vernetzung und Haftung der Folien miteinander sind sehr gut. Es entstehen aber bei einer Verklebung mit den verwendeten Klebstoffe nur sehr geringe Mengen an migrationsfähigen Epoxidmonomeren/primären aromatischen Aminen in der Klebstoffschicht und diese werden in der Folie fest gebunden. Diese Eigenschaft bleibt bei einer erfindungsgemäßen Mehrschichtfolie auch dann erhalten, wenn diese im Laufe ihres Herstellungsverfahrens auch einer Sterilisation oder anderweitigen Erwärmung auf höhere Temperatur unterzogen wird. Insbesondere entstehen auch unter Dampfsterilisationsbedingungen im Temperaturbereich von 121 bis 134°C über Zeiträume von bis zu 60 Minuten keine oder nur sehr geringe Mengen an migrationsfähigen Epoxidmonomeren.

Nachfolgend soll die Erfindung an einigen exemplarischen Beispielen näher erläutert werden. Dabei sind die angegeben Mengen Gewichtsprozent, falls nicht anders angegeben.

### Beispiele

### Beispiel 1 (erfindungsgemäß)

Zu Liofol PES 228 (60 Gew.-% Feststoffgehalt, OH-terminierter und vorgelöster Polyester) wurden 1 Gew.-% Pluracol PEP 450 (Polyether Tetrol) und 2,5 Gew.-% Erisys GE 60 (Sorbitol-Glycidylether, EEW 160-195) gegeben. Die resultierende Mischung wurde im Verhältnis 11:2 (Massenteile) mit Liofol UR 7391 (HDI-Isocyanurat-Silan-Härter) gemischt und auf einen Feststoffgehalt von 35 Gew.-% verdünnt, um eine Klebstoffzusammensetzung zu erhalten. Es wurden Laminate eines Polyethylenterephthalat (PET)/Aluminium-Prälaminats und OPA (orientiertes Polyamid) und CPP (Cast-Polypropylen) hergestellt, in dem jeweils 4,5 g/m² (trocken) der Klebstoffzusammensetzung auf die zu verklebenden Folien aufgetragen und mit einer Nordmeccanica Labocombi Laminiermaschine laminiert wurden. Das Laminat wurde für 14 Tage bei Raumtemperatur gehärtet. Für die Sterilisationstests wurden 14,4 cm x 14,4 cm Beutel aus dem Laminat hergestellt, mit 2-8 g Tenax TA (poröses Polymerharz auf Basis von 2,6-Diphenylenoxid, gereinigt durch CH₂Cl₂ Waschung) befüllt, verschlossen und sterilisiert. Die Sterilisationsbedingungen waren maximal 134°C für 60 Minuten. Danach wurde das Tenax mittels Flüssigchromatographie und ESI-MS auf das Vorhandensein von Epoxidmonomeren (Erisys GE 60) untersucht. Es konnten keine Monomere nachgewiesen werden. Nachweisgrenze: 1 ppb (Massenteile).

### Beispiel 2 (nicht erfindungsgemäß)

Zu Liofol PES 228 (60 Gew.-% Feststoffgehalt, OH-terminierter und vorgelöster Polyester) wurden 1 Gew.-% Pluracol PEP 450 (Polyether Tetrol) und 2,5 Gew.-% EPON 828 (Bisphenol-A-Diglycidylether "BADGE", EEW 184-190) gegeben. Die resultierende Mischung wurde im Verhältnis 23:2 (Massenteile) mit Liofol UR 7391 (HDI-Isocyanurat-Silan-Härter) gemischt und auf einen Feststoffgehalt von 35 Gew.-% verdünnt, um eine Klebstoffzusammensetzung zu erhalten. Es wurden Laminate eines Polyethylenterephthalat (PET)/Aluminium-Prälaminats und OPA (orientiertes Polyamid) und CPP (Cast-Polypropylen) hergestellt, in dem jeweils 4,5 g/m² (trocken) der Klebstoffzusammensetzung auf die zu verklebenden Folien aufgetragen und mit einer Nordmeccanica Labocombi Laminiermaschine laminiert wurden. Das Laminat wurde für 14 Tage bei Raumtemperatur gehärtet. Für die Sterilisationstests wurden 14,4 cm x 14,4 cm Beutel aus dem Laminat hergestellt, mit 2-8 g Tenax TA (poröses Polymerharz auf Basis von 2,6-Diphenylenoxid, gereinigt durch CH₂Cl₂ Waschung) befüllt, verschlossen und sterilisiert. Die Sterilisationsbedingungen waren maximal 134°C für 60 Minuten. Danach wurde das Tenax mittels Flüssigchromatographie und ESI-MS auf das Vorhandensein von Epoxidmonomeren (EPON 828) untersucht. Es konnten Monomere nachgewiesen werden.

### Zusammenfassung

Die vorliegende Erfindung betrifft ein Verfahren zum Herstellen von kaschierten Mehrschichtfolien, bei dem mindestens zwei Folien mit einen Polyurethan-Klebstoff verklebt werden, , wobei der PU-Klebstoff zwischen 0,1 bis 20 Gew.-% eines niedermolekularen Epoxids enthält, das mindestens eine Epoxidgruppe und mindestens eine Hydroxygruppe enthält, wobei das Epoxid chemisch ungebunden oder über mindestens eine Hydroxygruppe chemisch gebunden vorliegt, sowie Mehrschichtfolien, die nach dem beschriebenen Verfahren erhältlich sind.

## Patentansprüche

1. Verfahren zum Herstellen von kaschierten Mehrschichtfolien, wobei mindestens zwei Folien mit einem Polyurethan-Klebstoff miteinander verklebt werden, wobei der PU-Klebstoff mindestens ein NCO-funktionelles Polyurethanpräpolymer und/oder mindestens ein Polyisocyanat enthält, **dadurch gekennzeichnet, dass** der PU-Klebstoff bezogen auf den Klebstoff ferner zwischen 0,1 bis 20 Gew.-% mindestens eines niedermolekularen Epoxids enthält, das mindestens eine Epoxidgruppe und mindestens eine Hydroxygruppe trägt, wobei das Epoxid chemisch ungebunden oder über mindestens eine Hydroxygruppe chemisch gebunden vorliegt.

2. Verfahren nach Anspruch 1, **dadurch gekennzeichnet, dass** das mindestens eine niedermolekulare Epoxid, das mindestens eine Epoxidgruppe und mindestens eine Hydroxygruppe trägt, ein Glycidylester oder -ether, insbesondere ein Mono- oder Polyglycidylether eines Polyols ist, vorzugsweise ausgewählt aus der Gruppe der Glycidylether von Glycerin, Erythrit, Pentaerythrit, Xylitol, Sorbitol oder Mischungen daraus.

3. Verfahren nach Anspruch 2, **dadurch gekennzeichnet, dass** das mindestens eine niedermolekulare Epoxid, das mindestens eine Epoxidgruppe und mindestens eine Hydroxygruppe trägt, ein Sorbitol-Glycidylether ist.

4. Verfahren nach einem der Ansprüche 1 bis 3, **dadurch gekennzeichnet, dass** das mindestens eine niedermolekulare Epoxid, das mindestens eine Epoxidgruppe und mindestens eine Hydroxygruppe trägt, ein Epoxid mit einem EEW von 100 bis 500 g/mol, vorzugsweise 120-350 g/mol ist.

5. Verfahren nach einem der Ansprüche 1 bis 4, **dadurch gekennzeichnet, dass** der PU-Klebstoff mindestens ein Polyol, insbesondere ein Polyesterpolyol enthält.

6. Verfahren nach einem der Ansprüche 1 bis 5, **dadurch gekennzeichnet, dass** der PU-Klebstoff mindestens ein Polyisocyanat enthält, ausgewählt aus
(i) Isocyanuraten des Hexamethylendiisocyanates (HDI), Isocyanuraten des Isophorondiisocyanats (IPDI), Addukten aus aliphatischen oder cycloaliphatischen Diisocyanaten und niedermolekularen Triolen;
(ii) isocyanato-funktionellen Silanen, insbesondere solchen die durch Umsetzen eines, vorzugsweise schwerflüchtigen, aliphatischen oder cycloaliphatischen Polyisocyanats mit einem organofunktionellen Silan mit NCO-reaktiven Gruppen erhältlich sind; und
(iii) Mischungen aus den Verbindungen gemäß (i) und (ii).

7. Verfahren nach einem der Ansprüche 1 bis 6, **dadurch gekennzeichnet, dass** die Folien bei erhöhter Temperatur zwischen 30 bis 60 °C verklebt werden.

8. Verfahren nach einem der Ansprüche 1 bis 7, **dadurch gekennzeichnet, dass** die verklebten Folien nach der Aushärtung einer Sterilisation, insbesondere einer Dampfsterilisation, unterworfen werden.

9. Mehrschichtfolie, erhältlich durch ein Verfahren nach einem der Ansprüche 1 bis 8.

## Claims

1. A method for producing laminated multilayer films, at least two films being bonded to one another by means of a polyurethane adhesive, the PU adhesive containing at least one NCO-functional polyurethane prepolymer and/or at least one polyisocyanate, **characterized in that** the PU adhesive further contains 0.1 to 20 wt.% of at least one low-molecular-weight epoxide carrying at least one epoxide group and at least one hydroxyl group, the at least one epoxide group being present chemically unbound or chemically bound by means of at least one hydroxyl group.

2. The method according to claim 1, **characterized in that** the at least one low-molecular-weight epoxide carrying at least one epoxide group and at least one hydroxyl group is a glycidyl ester or glycidyl ether, in particular a mono- or polyglycidyl ether of a polyol, preferably selected from the group of the glycidyl ethers of glycerol, erythritol, pentaerythritol, xylitol, sorbitol, or mixtures thereof.

3. The method according to claim 2, **characterized in that** the at least one low-molecular-weight epoxide carrying at least one epoxide group and at least one hydroxyl group is a sorbitol glycidyl ether.

4. The method according to one of claims 1 to 3, **characterized in that** the at least one low-molecular-weight epoxide carrying at least one epoxide group and at least one hydroxyl group is an epoxide having an EEW of from 100 to 500 g/mol, preferably 120 to 350 g/mol.

5. The method according to one of claims 1 to 4, **characterized in that** the PU adhesive contains at least one polyol, in particular a polyester polyol.

6. The method according to one of claims 1 to 5, **characterized in that** the PU adhesive contains at least one polyisocyanate, selected from:
(i) isocyanurates of hexamethylene diisocyanate (HDI), isocyanurates of isophorone diisocyanate (IPDI), adducts of aliphatic or cycloaliphatic diisocyanates and low-molecular-weight triols;
(ii) isocyanato-functional silanes, in particular those that can be obtained by reacting a preferably low-volatility aliphatic or cycloaliphatic polyisocyanate with an organofunctional silane having NCO-reactive groups;
(iii) mixtures of the compounds according to (i) and (ii).

7. The method according to one of claims 1 to 6, **characterized in that** the films are bonded at an elevated temperature between 30 °C and 60 °C.

8. The method according to one of claims 1 to 7, **characterized in that**, after curing, the bonded films are subjected to sterilization, in particular steam sterilization.

9. A multi-layered film that is obtainable by means of a method according to one of claims 1 to 8.

## Revendications

1. Procédé de production de films multicouches stratifiés, dans lequel au moins deux films sont collés l'un à l'autre à l'aide d'un adhésif polyuréthane (PU), l'adhésif PU contenant au moins un prépolymère polyuréthane à fonction NCO et/ou au moins un polyisocyanate, **caractérisé en ce que** l'adhésif PU contient en outre, par rapport à l'adhésif, entre 0,1 et 20 % en poids d'au moins un époxyde de bas poids moléculaire, lequel porte au moins un groupe époxyde et au moins un groupe hydroxy, l'époxyde étant chimiquement non lié ou chimiquement lié par l'intermédiaire d'au moins un groupe hydroxy.

2. Procédé selon la revendication 1, **caractérisé en ce que** l'au moins un époxyde de bas poids moléculaire, lequel porte au moins un groupe époxyde et au moins un groupe hydroxy, est un ester ou éther glycidylique, en particulier un mono- ou polyglycidyléther d'un polyol, choisi de préférence dans le groupe des éthers glycidyliques de glycérine, d'érythritol, de pentaérythritol, de xylitol, de sorbitol ou leurs mélanges.

3. Procédé selon la revendication 2, **caractérisé en ce que** l'au moins un époxyde de bas poids moléculaire, lequel porte au moins un groupe époxyde et au moins un groupe hydroxy, est un éther glycidylique de sorbitol.

4. Procédé selon l'une des revendications 1 à 3, **caractérisé en ce que** l'au moins un époxyde de bas poids moléculaire, lequel porte au moins un groupe époxyde et au moins un groupe hydroxy, est un époxyde comportant un PEE de 100 à 500 g/mol, de préférence de 120 à 350 g/mol.

5. Procédé selon l'une des revendications 1 à 4, **caractérisé en ce que** l'adhésif PU contient au moins un polyol, en particulier un polyester polyol.

6. Procédé selon l'une des revendications 1 à 5, **caractérisé en ce que** l'adhésif PU contient au moins un polyisocyanate, choisi parmi
(i) des isocyanurates d'hexaméthylène diisocyanate (HDI), des isocyanurates d'isophorone diisocyanate (IPDI), des produits d'addition à base de diisocyanates aliphatiques ou cycloaliphatiques et de triols de bas poids moléculaire ;
(ii) des silanes à fonction isocyanato, en particulier ceux qui peuvent être obtenus en faisant réagir un polyisocyanate aliphatique ou cycloaliphatique, de préférence à faible volatilité, avec un silane organofonctionnel comportant des groupes réactifs NCO ; et
(iii) des mélanges des composés selon (i) et (ii).

7. Procédé selon l'une des revendications 1 à 6, **caractérisé en ce que** les films sont collés à une température élevée comprise entre 30 et 60 °C.

8. Procédé selon l'une des revendications 1 à 7, **caractérisé en ce que** les films collés sont soumis à une stérilisation, en particulier à une stérilisation à la vapeur, après durcissement.

9. Film multicouche pouvant être obtenu au moyen d'un procédé selon l'une des revendications 1 à 8.
